# FASCICULE DE BREVET EUROPEEN

(11) **EP 1 042 135 B1**
(45) Date de publication et mention de la délivrance du brevet: **02.08.2006**
(21) Numéro de dépôt: 98963590.9
(22) Date de dépôt: 22.12.1998
(51) Int. Cl.: B60K 6/04

(54) **DISPOSITIF DE TRANSMISSION DE VEHICULE AUTOMOBILE A MOTORISATION HYBRIDE COMPORTANT UN ACCOUPLEMENT COMMANDE DU MOTEUR ELECTRIQUE**
ANTRIEBSVORRICHTUNG FÜR KRAFTFAHRZEUG MIT HYBRIDANTRIEB MIT GESTEUERTER ZUSCHALTUNG DES ELEKTROMOTORS
TRANSMISSION DEVICE FOR MOTOR VEHICLE WITH HYBRID PROPULSION COMPRISING A DRIVE COUPLING FOR THE ELECTRIC ENGINE

(30) Priorité: 22.12.1997 FR 9716265
(43) Date de publication de la demande: 11.10.2000
(73) Titulaire: Renault s.a.s., 92100 Boulogne Billancourt (FR)
(72) Inventeur: GUIGNARD, Jean-Pierre, F-92500 Rueil Malmaison (FR)
(86) Numéro de dépôt international: PCT/FR1998/002824
(87) Numéro de publication internationale: WO 1999/032315

(56) Documents cités:
- EP-A- 0 492 152
- DE-A- 4 225 315
- DE-A- 4 436 383
- FR-A- 2 689 821
- US-A- 5 558 588

## Description

L'invention concerne un dispositif de transmission pour véhicule automobile à motorisation hybride thermique et électrique comportant un accouplement commandé du moteur électrique.

L'invention concerne plus particulièrement un dispositif de transmission pour véhicule automobile à motorisation hybride, fonctionnant en un mode thermique et/ou en un mode électrique, du type comportant un premier arbre d'entrée accouplé en rotation à un moteur thermique et un second arbre de sortie de mouvement lié en rotation à l'arbre d'entrée par des engrenages permettant d'établir différents régimes de rotation relative entre les deux arbres, et comportant des moyens d'accouplement, par engrenages, d'un moteur électrique à l'un des arbres.

On connaît de nombreux dispositifs de transmission pour véhicules hybrides à motorisation thermique et/ou électrique comportant un moteur électrique entraînant un arbre de la boîte de vitesses associée au mode de fonctionnement thermique.

Le document DE-4.436.383-A1 décrit et représente un exemple de réalisation d'un tel dispositif.

Un problème se pose quant à la liaison du moteur électrique avec l'arbre de la boîte de vitesses choisi comme prise de mouvement en mode de propulsion électrique.

En effet, en mode de fonctionnement électrique, et en particulier dans le cas d'une boîte à deux arbres parallèles primaires et secondaires, le moteur électrique entraîne en rotation un des arbres de la boîte de vitesses dans le but d'entraîner finalement en rotation l'arbre de sortie de la boîte de vitesses. Selon les performances que l'on désire obtenir et le type de moteur électrique dont on dispose, la liaison est réalisée sur l'arbre primaire ou sur l'arbre secondaire. L'embrayage réalisant l'accouplement entre le moteur thermique et l'arbre primaire en mode de fonctionnement thermique est alors débrayé afin de ne pas entraîner en rotation le moteur thermique et les inerties qui y sont liées.

En revanche, en mode de fonctionnement thermique, l'embrayage doit nécessairement être embrayé pour transmettre le mouvement à l'arbre primaire, ce qui a pour effet d'entraîner en permanence le moteur électrique et l'inertie qui lui est associée. Ceci pénalise le rendement global de la transmission en mettant en jeu l'inertie du moteur électrique et provoque une usure inutile du moteur électrique.

Un second problème se pose en ce qui concerne l'encombrement du dispositif. Pour entraîner directement un des arbres de la boîte de vitesses, le moteur électrique doit nécessairement être disposé en bout d'arbre, et par conséquent à une extrémité de la boîte opposée au moteur thermique, ce qui est pénalisant pour un véhicule dans lequel le groupe motopropulseur est placé transversalement.

Afin de remédier à ces inconvénients, l'invention propose un dispositif de transmission du type décrit précédemment, caractérisé en ce que les moyens de liaison sont disposés à l'intérieur du carter de la boîte de vitesses.

Selon d'autres caractéristiques de l'invention :
- le dispositif commandé d'accouplement du moteur électrique comporte des moyens commandés de crabotage d'un pignon fou de l'arbre primaire qui engrène avec un pignon fixe de l'arbre de sortie du moteur électrique ;
- le dispositif commandé d'accouplement du moteur électrique comporte des moyens commandés de crabotage d'un pignon fou de l'arbre de sortie du moteur électrique qui engrène avec un pignon fixe de l'arbre primaire ;
- le dispositif commandé d'accouplement du moteur électrique comporte des moyens commandés de crabotage d'un pignon fou de l'arbre de sortie du moteur électrique qui engrène avec un pignon fou de l'arbre secondaire qui engrène avec un pignon fixe de l'arbre primaire ;
- le dispositif commandé d'accouplement du moteur électrique comporte des moyens commandés de crabotage d'un pignon fou de l'arbre de sortie du moteur électrique qui entraîne une chaîne ou une courroie qui entraîne en rotation une première denture d'un pignon fou de l'arbre secondaire dont une deuxième denture engrène avec un pignon fixe de l'arbre primaire ;
- en mode de fonctionnement électrique, au moins un rapport de marche avant de la boîte de vitesses transmet le mouvement de l'arbre primaire à l'arbre secondaire ;
- le dispositif commandé d'accouplement du moteur électrique comporte des moyens commandés de crabotage d'un pignon fou de l'arbre de sortie du moteur électrique qui engrène avec un pignon fou craboté sur l'arbre secondaire ;
- le dispositif commandé d'accouplement du moteur électrique comporte des moyens de crabotage d'un pignon fou de l'arbre de sortie du moteur électrique entraînant une chaîne qui entraîne en rotation une denture d'un pignon fou craboté sur l'arbre secondaire ;
- la boîte de vitesses associée au mode de fonctionnement thermique du véhicule est au point mort en mode de fonctionnement électrique ;
- l'arbre d'entrée et l'arbre de sortie sont deux arbres coaxiaux d'une boîte de vitesses manuelle ou automatique à au moins un train épicycloïdal, qui permet en mode thermique d'établir plusieurs rapports de vitesses entre les deux arbres ; .
- le dispositif commandé d'accouplement du moteur électrique comporte des moyens de crabotage d'un pignon fou de l'arbre de sortie du moteur électrique qui engrène avec un pignon fixe de l'arbre d'entrée, solidaire d'un planétaire, d'un porte-satellites, ou d'une couronne d'un train épicycloïdal de la boîte de vitesses ;
- le fonctionnement en mode électrique permet d'établir plusieurs rapports de vitesses entre les deux arbres de la boîte de vitesses ;
- le dispositif commandé d'accouplement du moteur électrique comporte des moyens de crabotage d'un pignon fou de l'arbre de sortie du moteur électrique qui engrène avec un pignon fixe de l'arbre de sortie de la boîte de vitesses ;
- le dispositif comporte un embrayage interposé entre le moteur thermique et l'arbre d'entrée est qui est débrayé en mode de fonctionnement électrique ;
- le moteur électrique est disposé sur le côté d'un carter du dispositif de transmission et transversalement par rapport au véhicule.

D'autres caractéristiques et avantages de l'invention apparaîtront à la lecture de la description détaillée qui suit, de six modes de réalisation de l'invention, pour la compréhension de laquelle on se reportera aux dessins annexés dans lesquels:

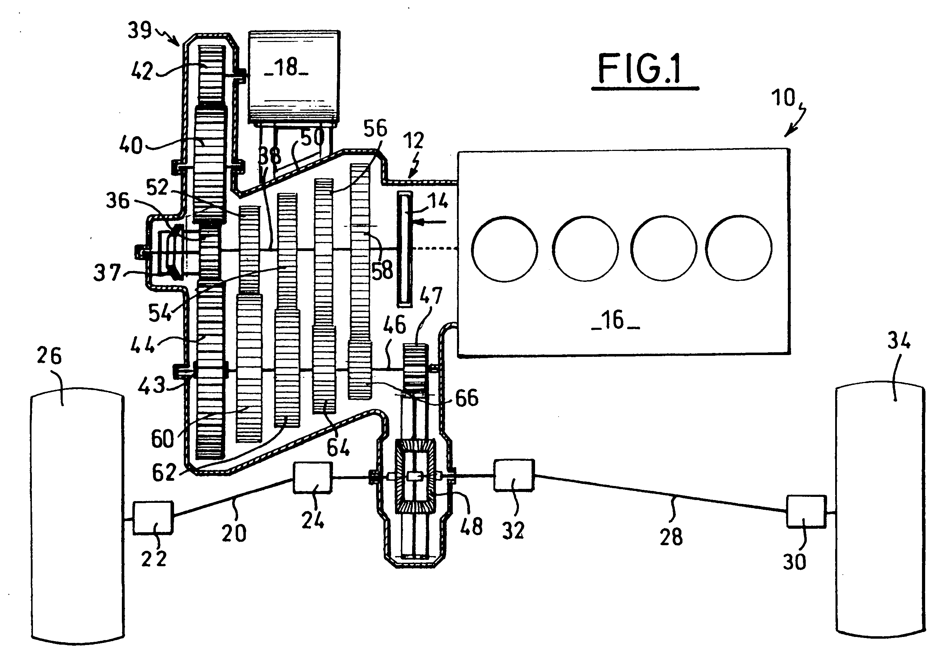

- la figure 1 est un schéma de principe d'un dispositif de transmission pour véhicule automobile à motorisation hybride conforme aux enseignements de l'invention, dans lequel le dispositif commandé d'accouplement du moteur électrique comporte des moyens commandés de crabotage d'un pignon fou de l'arbre primaire qui engrène avec un pignon fixe de l'arbre de sortie du moteur électrique ;

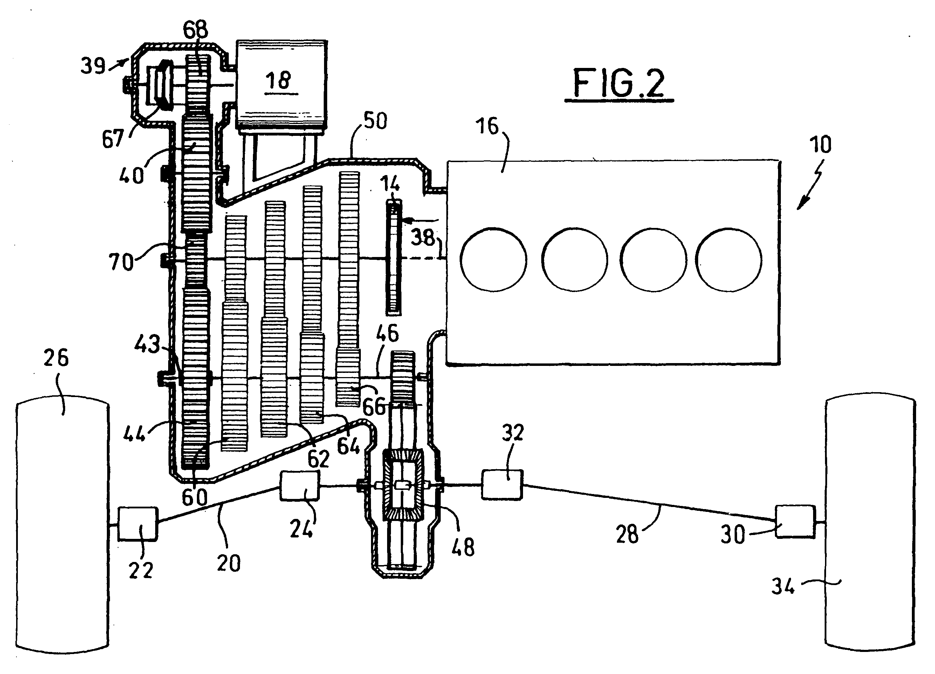

- la figure 2 est un schéma similaire à celui de la figure 1 dans lequel le dispositif commandé d'accouplement du moteur électrique comporte des moyens commandés de crabotage d'un pignon fou de l'arbre de sortie du moteur électrique qui engrène avec un pignon fixe de l'arbre primaire ;

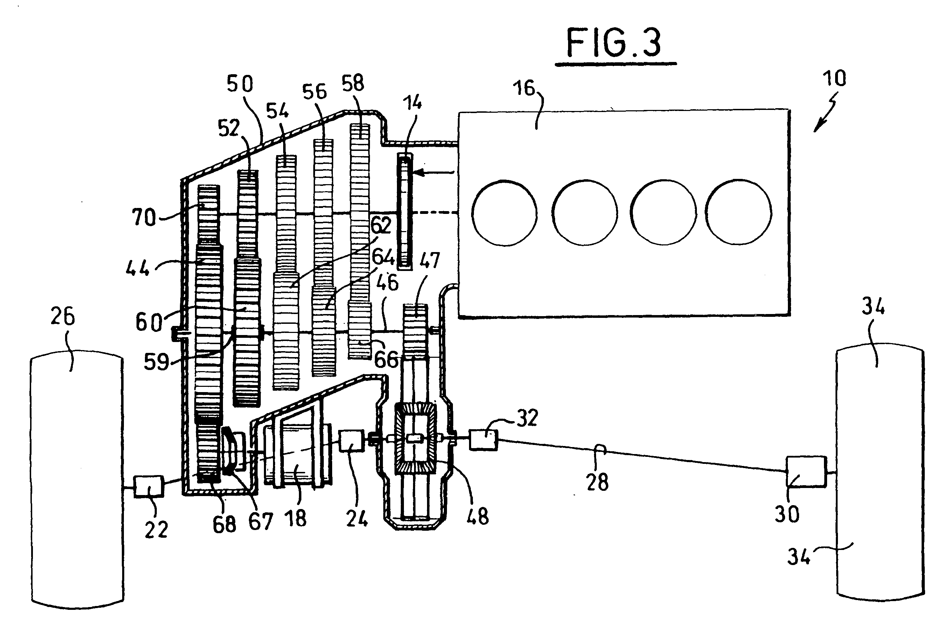

- la figure 3 est un schéma similaire à celui de la figure 1 dans lequel le dispositif commandé d'accouplement du moteur électrique comporte des moyens commandés de crabotage d'un pignon fou de l'arbre de sortie du moteur électrique qui engrène avec un pignon fou de l'arbre secondaire qui engrène avec un pignon fixe de l'arbre primaire ;

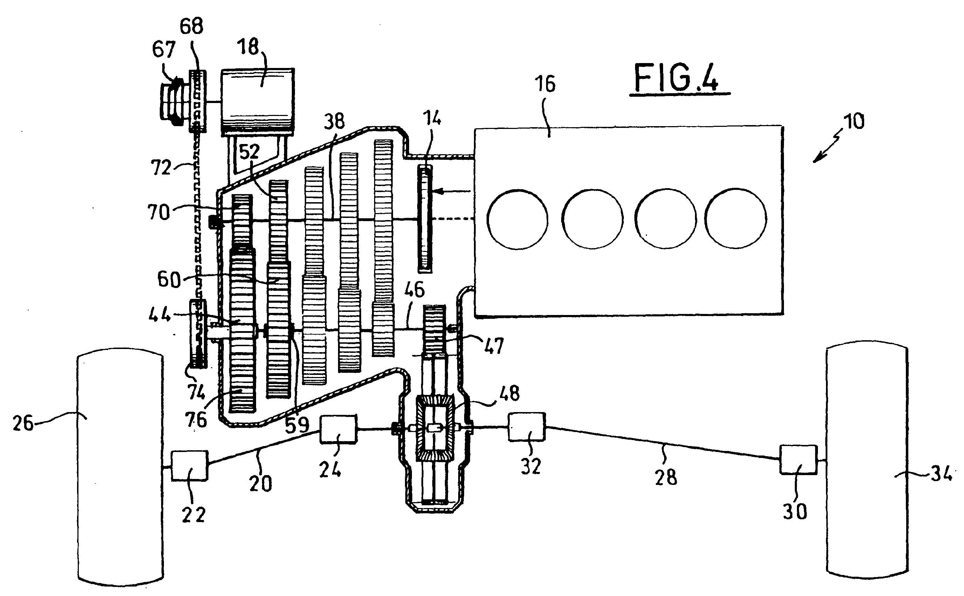

- la figure 4 est un schéma similaire à celui de la figure 1 dans lequel le dispositif commandé d'accouplement du moteur électrique comporte des moyens commandés de crabotage d'un pignon fou de l'arbre de sortie du moteur électrique qui entraîne une chaîne ou une courroie qui entraîne en rotation une première denture d'un pignon fou de l'arbre secondaire dont une deuxième denture engrène avec un pignon fixe de l'arbre primaire ;

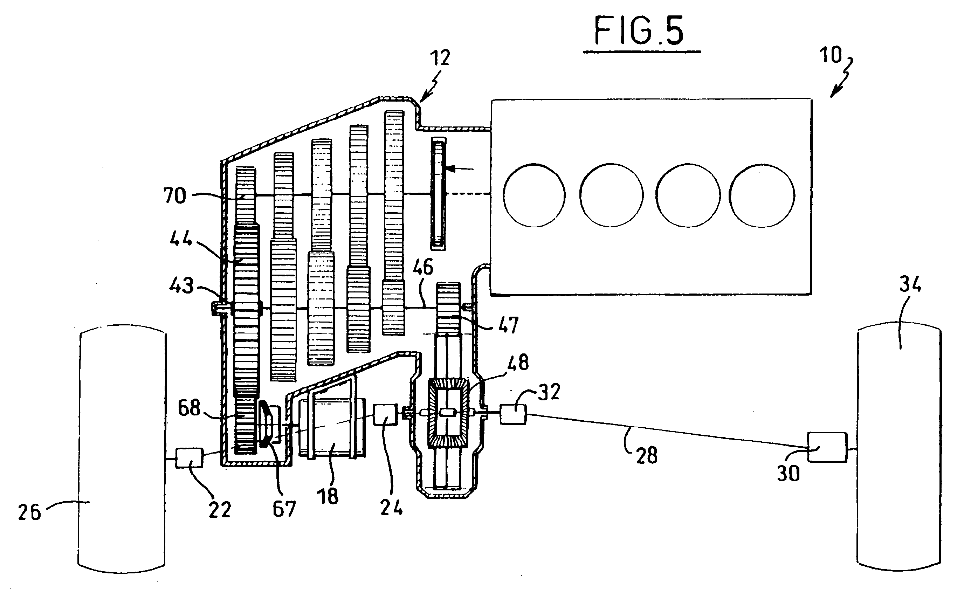

- la figure 5 est un schéma similaire à celui de la figure 1 dans lequel le dispositif commandé d'accouplement du moteur électrique comporte des moyens commandés de crabotage d'un pignon fou de l'arbre de sortie du moteur électrique qui engrène avec un pignon fou craboté sur l'arbre secondaire ;

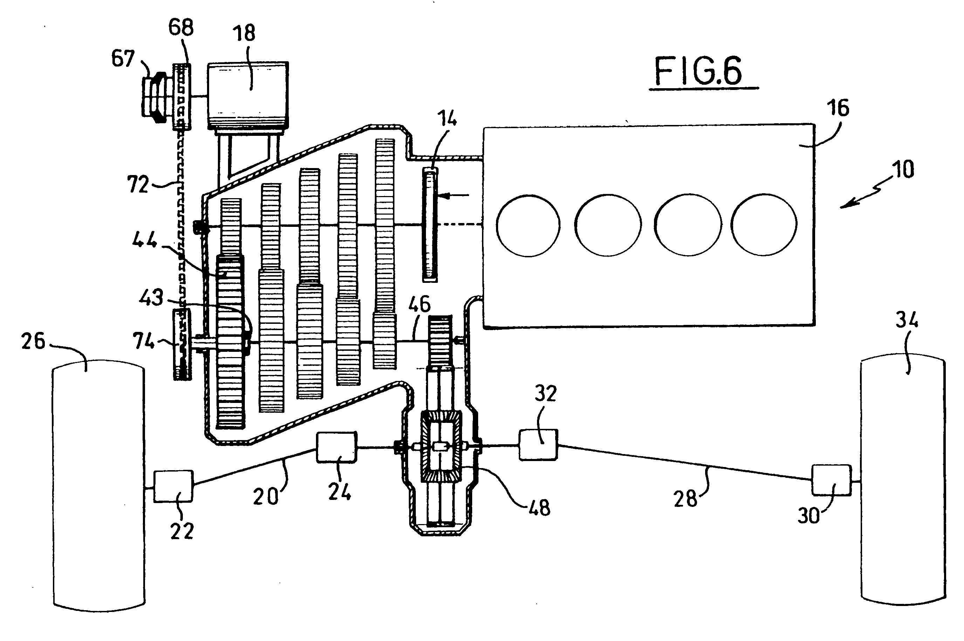

- la figure 6 est un schéma similaire à celui de la figure 1 dans lequel le dispositif commandé d'accouplement du moteur électrique comporte des moyens de crabotage d'un pignon fou de l'arbre de sortie du moteur électrique entraînant une chaîne qui entraîne en rotation une denture d'un pignon fou craboté sur l'arbre secondaire.

On voit sur la figure 1 l'ensemble d'un dispositif 10 de transmission pour véhicule automobile à motorisation hybride.

De manière connue, une boîte de vitesses mécanique 12, à deux arbres parallèles primaire et secondaire, est liée en rotation par l'intermédiaire d'un embrayage 14 à un moteur thermique 16 et est aussi liée en rotation à un moteur électrique 18.

La boîte de vitesses 12 entraîne deux demi-arbres de transmission 20 et 28 comportant chacun respectivement deux joints homocinétiques 22, 24, 32, 30 qui entraînent respectivement deux roues 26, 34 du véhicule.

Lorsque le véhicule est en mode de fonctionnement électrique, le moteur thermique 16 est arrêté et l'embrayage 14 est débrayé. Cette configuration permet avantageusement d'isoler le moteur thermique 16 de la chaîne du mouvement et donc ainsi de réduire les inerties mises en jeu, dans le but d'obtenir un meilleur rendement du dispositif.

Dans ce premier mode de réalisation, comme dans ceux illustrés aux figures 2 à 4, le moteur électrique 18 transmet sa puissance motrice à l'arbre primaire 38 qui transmet la puissance à l'arbre secondaire 46.

A cet effet, les moyens commandés d'accouplement du moteur 18 comportent un pignon 36 porté par l'arbre primaire 38 auquel il peut être craboté par un mécanisme 37 de crabotage, et qui entraîné en rotation par un motoréducteur 39 qui comprend le moteur électrique 18 et deux pignons intermédiaires en cascade 40 et 42.

Le pignon 36 engrène avec un pignon 44, porté par un arbre secondaire 46 auquel il peut être craboté par un mécanisme 43 de crabotage, et qui transmet la puissance motrice du moteur électrique 18. Les mécanismes 37 et 43 de crabotage respectif des pignons 38 et 44 fonctionnent simultanément. L'arbre secondaire 46 engrène alors par l'intermédiaire d'un pignon 47 avec un différentiel 48 qui transmet le mouvement aux arbres de transmission 20 et 28.

Avantageusement, cette disposition permet de transmettre la puissance motrice du moteur électrique 18 à l'arbre secondaire 46 de sortie de la boîte de vitesses 12 par l'intermédiaire de l'arbre primaire 36 et de pignons inclus dans un carter 50 de la boîte de vitesses 12. Cette disposition permet donc de se dispenser d'une liaison en rotation du moteur électrique 18 en bout d'arbre, dans le but de préserver la compacité de l'ensemble du dispositif.

En outre, en mode de fonctionnement électrique, cette disposition n'est pas restrictive quant au choix des rapports de vitesses relatives entre les arbres 38 et 46. En effet, le crabotage du pignon 36 sur l'arbre primaire 38 par l'intermédiaire du mécanisme 37 entraîne la rotation d'autres pignons 52, 54, 56 et 58 portés par l'arbre primaire 38. Le véhicule peut donc bénéficier en mode électrique de cinq rapports de marche avant selon que l'on crabote un des cinq pignons fous 44, 60, 62, 64, ou 66 portés par l'arbre secondaire 46.

En mode de fonctionnement thermique, le crabot 37 du pignon 36 de l'arbre primaire 38 étant nécessairement décraboté pour ne pas entraîner à vide le moteur électrique, le véhicule bénéficie de quatre rapports de marche avant selon que l'on réalise le crabotage de l'un des quatre pignons fous 60, 62, 64, ou 66 portés par l'arbre secondaire 46.

On voit sur la figure 2 un deuxième mode de réalisation de l'invention. Dans un mode de fonctionnement similaire à celui décrit en relation avec la figure 1, le moteur électrique 18 transmet sa puissance motrice à l'arbre primaire 38 de la boîte de vitesses 12.

Les moyens d'accouplement du moteur 18 comportent un pignon fou 68 porté par l'arbre de sortie du moteur électrique 18 auquel il peut être craboté par un mécanisme 67 de crabotage; Le pignon 68 engrène avec un pignon fixe 40 du motoréducteur 39 qui engrène avec un pignon fixe 70 de l'arbre primaire 38 de la boîte de vitesses 12. Le pignon fixe 70 engrène avec le pignon fou 44 porté par l'arbre secondaire 46 auquel il peut être craboté par le mécanisme de crabotage 43. Les mécanismes 67 et 43 de crabotage respectif des pignons 68 et 44 fonctionnent simultanément. L'arbre secondaire 46 transmet la puissance motrice au différentiel 48 par l'intermédiaire du pignon 47.

Avantageusement, cette disposition ne modifie en rien l'architecture d'une boîte de vitesses conventionnelle 12 associée au mode de fonctionnement thermique, puisque les moyens de crabotage sont uniquement portés par l'arbre de sortie du moteur électrique 18.

En effet, dans une optique de réduction des coûts de développement et de fabrication, un tel dispositif 10 de motorisation hybride peut être avantageusement extrapolé à partir d'une boîte de vitesses 12 d'un dispositif à motorisation conventionnelle thermique.

Par ailleurs, comme précédemment illustré à la figure 1, une telle disposition permet avantageusement, en mode de fonctionnement électrique de bénéficier de cinq rapports de vitesses relatives de marche avant entre les deux arbres primaire 38 et secondaire 46 de la boîte de vitesses 12 selon que l'on crabote l'un des cinq pignons fous 44, 60, 62, 64, ou 66 portés par l'arbre secondaire 46, et, en mode de fonctionnement thermique, de cinq rapports de marche avant selon que l'on crabote l'un des cinq pignons fous 44, 60, 62, 64, ou 66 portés par l'arbre secondaire 46.

La figure 3 illustre un troisième mode de réalisation de l'invention. Conformément à l'invention, le moteur électrique 18 transmet sa puissance motrice à l'arbre primaire 38 de la boîte de vitesses 12.

Les moyens commandés d'accouplement comportent le pignon fou 68 porté par l'arbre de sortie du moteur électrique 18 auquel il peut être craboté par le mécanisme 67 de crabotage. Le pignon 68 engrène avec le pignon fou 44 de l'arbre secondaire qui engrène avec le pignon fixe 70 de l'arbre primaire 38. Le mouvement de rotation de l'arbre primaire 38 est transmis par exemple par l'intermédiaire du pignon fixe 52 qui engrène avec le pignon fou 60 porté par l'arbre secondaire 46 auquel il peut être craboté par un mécanisme 59 de crabotage. Les mécanismes 67 et 59 de crabotage respectif des pignons 68 et 60 fonctionnent simultanément L'arbre secondaire 46 transmet la puissance motrice au différentiel 48 par l'intermédiaire du pignon 47.

Cette disposition est particulièrement avantageuse car elle permet de réduire le nombre de pignons mis en jeu dans la totalité du dispositif. En effet, dans les deux précédentes solutions, le choix d'un engrènement sur un pignon de l'arbre primaire nécessite l'emploi du pignon intermédiaire 40 pour conserver le sens de rotation voulu.

Dans le cas présent, le pignon fou 44 remplit ce rôle avantageusement, et ce d'autant qu'il est un des pignons de l'arbre secondaire 46 de la boîte de vitesses 12. Cette disposition améliore donc la compacité du dispositif 10 par la réduction du nombre de pignons mis en jeu, sans lier en rotation directement le moteur électrique 18 à un quelconque des deux arbres 38 et 46.

Enfin, cette disposition permet avantageusement, en mode de fonctionnement électrique, de disposer de quatre rapports de vitesses relatives de marche avant entre les deux arbres primaire 38 et secondaire 46 de la boîte de vitesses 12 selon que l'on crabote l'un des quatre pignons fous 60, 62, 64, ou 66, et en mode de fonctionnement thermique, de cinq rapports de marche avant selon que l'on crabote l'un des cinq pignons fous 44, 60, 62, 64, ou 66.

La figure 4 présente un quatrième mode de réalisation de l'invention qui est une disposition constructive en variante de la figure 3.

Les moyens commandés d'accouplement du moteur électrique 18 à l'arbre primaire 38 de la boîte de vitesses 12 comportent un pignon fou 68 porté par l'arbre de sortie du moteur électrique 18 auquel il peut être craboté par le mécanisme 67 de crabotage. Le pignon 68 entraîne une chaîne ou une courroie crantée 72 qui entraîne un premier jeu de dentures 74 du pignon fou 44 dont un deuxième jeu 76 engrène d'une façon similaire à celle décrite dans la figure 3 avec le pignon fixe 70 de l'arbre primaire 38.

Le principe de la transmission du mouvement et le nombre de rapports de marche avant en mode de fonctionnement électrique ou thermique sont par la suite analogues à ceux décrit à la figure 3.

Avantageusement, cette disposition permet de positionner le moteur électrique 18 à l'extérieur du carter 50 de la boîte de vitesses 12, pour en faciliter par exemple la maintenance.

La figure 5 présente un cinquième mode de réalisation de l'invention dans lequel les moyens d'accouplement commandés permettent la transmission directe de la puissance motrice du moteur électrique 18 à l'arbre secondaire 46.

Le pignon fou 68 est porté par l'arbre de sortie du moteur électrique 18 auquel il peut être craboté par le mécanisme 67 de crabotage. Le pignon 68 engrène avec le pignon fou 44 porté par l'arbre secondaire 46 auquel il peut être craboté par le mécanisme 43 de crabotage. Les mécanismes 67 et 43 de crabotage respectif des pignons 68 et 44 fonctionnent simultanément. Le pignon 44 transmet la puissance motrice du moteur électrique 18, sans passer par l'intermédiaire de pignons de l'arbre primaire 38.

Avantageusement, une grande progressivité de la vitesse de sortie de l'arbre secondaire peut être obtenue en choisissant un moteur électrique approprié 18 offrant une large plage de régimes de rotation. Le régime de rotation des arbres de roues 20 et 28 est alors fonction du régime de rotation de l'arbre de sortie du moteur électrique 18 commandé par exemple par un variateur.

Le véhicule bénéficie alors en mode de fonctionnement électrique d'un rapport de marche avant et, en mode de fonctionnement thermique, de cinq rapports de marche avant selon que l'on crabote l'un des cinq pignons fous 44, 60, 62, 64, ou 66 de l'arbre secondaire 46.

La figure 6 présente un sixième mode de réalisation de l'invention qui est une disposition constructive en variante de la figure 5.

Les moyens commandés d'accouplement du moteur électrique 18 à l'arbre secondaire comportent le pignon fou 68 porté par l'arbre de sortie du moteur électrique 18 auquel il peut être craboté par le mécanisme 67 de crabotage. Le pignon 68 entraîne une chaîne ou une courroie crantée 72 qui entraîne le premier jeu de dentures 74 du pignon 44, porté par l'arbre secondaire 46 auquel il peut être directement craboté. Les mécanismes 67 et 43 de crabotage respectif des pignons 68 et 44 fonctionnent simultanément. La puissance motrice du moteur électrique 18 est alors transmise à l'arbre secondaire.

Pour des raisons analogues à celles décrites à la figure 4, ce dispositif permet de positionner le moteur électrique 18 à l'extérieur du carter 50 de la boîte de vitesses 12, ce qui favorise les opérations de maintenance éventuelles.

Le véhicule bénéficie des mêmes rapports de marche avant en mode de fonctionnement électrique ou thermique que ceux décrits pour la figure 5.

## Revendications

1. Dispositif (10) de transmission pour véhicule automobile à motorisation hybride, fonctionnant en un mode thermique et/ou en un mode électrique, comportant un moteur thermique (16), un moteur électrique (18) et une boîte de vitesses mécanique (12) à arbres parallèles dont l'arbre primaire (38) est accouplé en rotation au moteur thermique (16) et dont l'arbre secondaire (46) de sortie est lié en rotation à l'arbre d'entrée (38) par plusieurs engrenages, le moteur électrique (18) étant lié en rotation à l'un des arbres de la boîte de vitesses (12) par des moyens de liaison en rotation par engrenages incluant un dispositif commandé d'accouplement, **caractérisé en ce que** les moyens de liaison sont disposés à l'intérieur du carter (50) de la boîte de vitesses (12).

2. Dispositif de transmission selon la revendication 1, **caractérisé en ce que** le dispositif commandé d'accouplement du moteur électrique (18) comporte des moyens commandés de crabotage (37) d'un pignon fou (36) de l'arbre primaire (38) qui engrène avec un pignon fixe de l'arbre de sortie du moteur électrique (42).

3. Dispositif de transmission selon la revendication 1, **caractérisé en ce que** le dispositif commandé d'accouplement du moteur électrique comporte des moyens commandés de crabotage (67) d'un pignon fou (68) de l'arbre de sortie du moteur électrique (18) qui engrène avec un pignon fixe (70) de l'arbre primaire (38).

4. Dispositif de transmission selon la revendication 1, **caractérisé en ce que** le dispositif commandé d'accouplement du moteur électrique (18) comporte des moyens commandés de crabotage (67) d'un pignon fou (68) de l'arbre de sortie du moteur électrique (18) qui engrène avec un pignon fou (44) de l'arbre secondaire (46) qui engrène avec un pignon fixe (70) de l'arbre primaire (38).

5. Dispositif de transmission selon la revendication 1, **caractérisé en ce que** le dispositif commandé d'accouplement du moteur électrique(18) comporte des moyens commandés de crabotage (67) d'un pignon fou (68) de l'arbre de sortie du moteur électrique (18) qui entraîne une chaîne ou une courroie (72) qui entraîne en rotation une première denture (74) d'un pignon fou (44) de l'arbre secondaire (46) dont une deuxième denture (76) engrène avec un pignon fixe (70) de l'arbre primaire (38).

6. Dispositif de transmission selon l'une quelconque des revendications 1 à 5, **caractérisé en ce que**, en mode de fonctionnement électrique, au moins un rapport de marche avant de la boîte de vitesses (12) transmet le mouvement de l'arbre primaire (38) à l'arbre secondaire (46).

7. Dispositif de transmission selon la revendication 1, **caractérisé en ce que** le dispositif commandé d'accouplement du moteur électrique (18) comporte des moyens commandés de crabotage (67) d'un pignon fou (68) de l'arbre de sortie du moteur électrique (18) qui engrène avec un pignon fou (44) porté par l'arbre secondaire (46) auquel il est craboté par des moyens de crabotage (43).

8. Dispositif de transmission selon la revendication 1, **caractérisé en ce que** le dispositif commandé d'accouplement du moteur électrique (18) comporte des moyens de crabotage (67) d'un pignon fou (68) de l'arbre de sortie du moteur électrique (18) entraînant une chaîne qui entraîne en rotation une denture (74) d'un pignon fou (44) porté par sur l'arbre secondaire (46) auquel il est craboté par des moyens de crabotage (43).

9. Dispositif de transmission selon l'une des revendications 7 ou 8, **caractérisé en ce que** la boîte de vitesses (12) associée au mode de fonctionnement thermique du véhicule est au point mort en mode de fonctionnement électrique.

10. Dispositif de transmission selon l'une quelconque des revendications précédentes, **caractérisé en ce qu'**il comporte un embrayage (14) interposé entre le moteur thermique (16) et l'arbre d'entrée (38) qui est débrayé en mode de fonctionnement électrique.

11. Dispositif de transmission selon l'une quelconque des revendications précédentes, **caractérisé en ce que** le moteur électrique (18) est disposé sur le côté d'un carter (50) du dispositif de transmission et transversalement par rapport au véhicule.

## Claims

1. Transmission device (10) for a motor vehicle with hybrid drive, operating in combustion and/or electric mode, comprising a combustion engine (16), an electric motor (18) and a mechanical gearbox (12) with parallel shafts in which the primary shaft (38) is coupled to the combustion engine (16) with respect to rotation and the secondary output shaft (46) is connected to the input shaft (38) with respect to rotation by means of a plurality of gears, the electric motor (18) being connected to one of the shafts of the gearbox (12) with respect to rotation by means for connecting with respect to rotation using gears, including a controlled coupling device, **characterized in that** the connecting means are positioned inside the casing (50) of the gearbox (12).

2. Transmission device according to Claim 1, **characterized in that** the controlled coupling device of the electric motor (18) comprises controlled clutch means (37) acting on an idle pinion (36) on the primary shaft (38) which engages with a fixed pinion on the output shaft of the electric motor (42).

3. Transmission device according to Claim 1, **characterized in that** the controlled coupling device of the electric motor comprises controlled clutch means (67) acting on an idle pinion (68) on the output shaft of the electric motor (18) which engages with a fixed pinion (70) on the primary shaft (38).

4. Transmission device according to Claim 1, **characterized in that** the controlled coupling device of the electric motor (18) comprises controlled clutch means (67) acting on an idle pinion (68) on the output shaft of the electric motor (18) which engages with an idle pinion (44) on the secondary shaft (46) which engages with a fixed pinion (70) on the primary shaft (38) .

5. Transmission device according to Claim 1, **characterized in that** the controlled coupling device of the electric motor (18) comprises controlled clutch means (67) acting on an idle pinion (68) on the output shaft of the electric motor (18) which drives a chain or a belt (72) which rotates a first toothing (74) of an idle pinion (44) on the secondary shaft (46), which has a second toothing (76) engaging with a fixed pinion (70) on the primary shaft (38).

6. Transmission device according to any one of Claims 1 to 5, **characterized in that**, in electric operating mode, at least one forward gear ratio of the gearbox (12) transmits the movement of the primary shaft (38) to the secondary shaft (46).

7. Transmission device according to Claim 1, **characterized in that** the controlled coupling device of the electric motor (18) comprises controlled clutch means (67) acting on an idle pinion (68) on the output shaft of the electric motor (18) which engages with an idle pinion (44) carried by the secondary shaft (46) with which it can be made to engage by clutch means (43).

8. Transmission device according to Claim 1, **characterized in that** the controlled coupling device of the electric motor (18) comprises clutch means (67) acting on an idle pinion (68) on the output shaft of the electric motor (18) which drives a chain which rotates a toothing (74) of an idle pinion (44) carried by the secondary shaft (46) with which it can be made to engage by clutch means (43).

9. Transmission device according to either of Claims 7 and 8, **characterized in that** the gearbox (12) associated with the combustion operating mode of the vehicle is in neutral gear in electric operating mode.

10. Transmission device according to any one of the preceding claims, **characterized in that** it comprises a clutch (14) interposed between the combustion engine (16) and the input shaft (38), which is disengaged in electric operating mode.

11. Transmission device according to any one of the preceding claims, **characterized in that** the electric motor (18) is positioned on the side of a casing (50) of the transmission device and transversely with respect to the vehicle.

## Patentansprüche

1. Antriebsvorrichtung (10) für ein Kraftfahrzeug mit Hybridmotorisierung, welche in einem thermischen Modus und/oder einem elektrischen Modus betrieben wird, aufweisend einen Verbrennungsmotor (16), einen elektrischen Motor (18) und ein mechanisches Getriebe (12) mit parallelen Wellen, von denen die Antriebswelle (38) in Drehung mit dem Verbrennungsmotor (16) gekoppelt ist und von denen die sekundäre Abtriebswelle (46) in Drehung mit der Antriebswelle (38) über mehrere Zahnräder verbunden ist, wobei der elektrische Motor (18) in Drehung mit der einen der Wellen des Getriebes (12) über Drehverbindungsmittel über Zahnräder verbunden ist, einschließlich einer gesteuerten Kupplungsvorrichtung, **dadurch gekennzeichnet, dass** die Verbindungsmittel im Inneren des Gehäuses (50) des Getriebes (12) angeordnet sind.

2. Antriebsvorrichtung nach Anspruch 1, **dadurch gekennzeichnet, dass** die gesteuerte Kupplungsvorrichtung des elektrischen Motors (18) gesteuerte Klauenkupplungsmittel (37) eines beweglichen Ritzels (36) der Antriebswelle (38) aufweist, welches mit einem festen Ritzel der Abtriebswelle des elektrischen Motors (42) in Eingriff ist.

3. Antriebsvorrichtung nach Anspruch 1, **dadurch gekennzeichnet, dass** die gesteuerte Kupplungsvorrichtung des elektrischen Motors gesteuerte Klauenkupplungsmittel (67) eines beweglichen Ritzels (68) der Abtriebswelle des elektrischen Motors (18) aufweist, welches mit einem festen Ritzel (70) der Antriebswelle (38) in Eingriff ist.

4. Antriebsvorrichtung nach Anspruch 1, **dadurch gekennzeichnet, dass** die gesteuerte Kupplungsvorrichtung des elektrischen Motors (18) gesteuerte Klauenkupplungsmittel (67) eines beweglichen Ritzels (68) der Abtriebswelle des elektrischen Motors (18) aufweist, welches mit einem beweglichen Ritzel (44) der sekundären Welle (46) in Eingriff ist, welches mit einem festen Ritzel (70) der Antriebswelle (38) in Eingriff ist.

5. Antriebsvorrichtung nach Anspruch 1, **dadurch gekennzeichnet, dass** die gesteuerte Kupplungsvorrichtung des elektrischen Motors (18) gesteuerte Klauenkupplungsmittel (67) eines beweglichen Ritzels (68) der Abtriebswelle des elektrischen Motors (18) aufweist, welches eine Kette oder einen Riemen (72) antreibt, welcher in Drehung eine erste Verzahnung (74) eines beweglichen Ritzels (44) der sekundären Welle (46) antreibt, von dem eine zweite Verzahnung (76) mit einem festen Ritzel (70) der Antriebswelle (38) in Eingriff ist.

6. Antriebsvorrichtung nach irgendeinem der Ansprüche 1 bis 5, **dadurch gekennzeichnet, dass** im elektrischen Betriebsmodus mindestens ein Vorwärtsgang des Getriebes (12) die Bewegung der Antriebswelle (38) auf die sekundäre Welle (46) überträgt.

7. Antriebsvorrichtung nach Anspruch 1, **dadurch gekennzeichnet, dass** die gesteuerte Kupplungsvorrichtung des elektrischen Motors (18) gesteuerte Klauenkupplungsmittel (67) eines beweglichen Ritzels (68) der Abtriebswelle des elektrischen Motors (18) aufweist, welches mit einem beweglichen Ritzel (44) in Eingriff ist, das durch die sekundäre Welle (46) getragen wird, an welcher es durch Klauenkupplungsmittel (43) formschlüssig befestigt ist.

8. Antriebsvorrichtung nach Anspruch 1, **dadurch gekennzeichnet, dass** die gesteuerte Kupplungsvorrichtung des elektrischen Motors (18) Klauenkupplungsmittel (67) eines beweglichen Ritzels (68) der Abtriebswelle des elektrischen Motors (18) aufweist, welches eine Kette antreibt, die in Drehung eine Verzahnung (74) eines beweglichen Ritzels (44) antreibt, welches durch die sekundäre Welle (46) getragen wird, an welcher es durch Klauenkupplungsmittel (43) formschlüssig befestigt ist.

9. Antriebsvorrichtung nach einem der Ansprüche 7 oder 8, **dadurch gekennzeichnet, dass** das Getriebe (12), welches zu dem thermischen Betriebsmodus des Fahrzeugs gehört, im elektrischen Betriebsmodus im Totpunkt ist.

10. Antriebsvorrichtung nach irgendeinem der vorangegangen Ansprüche, **dadurch gekennzeichnet, dass** sie eine Kupplung (14) aufweist, welche zwischen den Verbrennungsmotor (16) und die Antriebswelle (38) gesetzt ist, welche im elektrischen Betriebsmodus ausgekuppelt wird.

11. Antriebsvorrichtung nach irgendeinem der vorangegangenen Ansprüche, **dadurch gekennzeichnet, dass** der elektrische Motor (18) auf der Seite eines Gehäuses (50) der Antriebsvorrichtung und transversal im Verhältnis zum Fahrzeug angeordnet ist.
